# FASCICULE DE BREVET EUROPEEN

(11) **EP 3 126 724 B1**
(45) Date de publication et mention de la délivrance du brevet: **20.05.2020**
(21) Numéro de dépôt: 15717581.1
(22) Date de dépôt: 31.03.2015
(51) Int. Cl.: F16K 31/53, F02D 11/10, F16K 31/04, F02M 26/54, F02M 26/67

(54) **VANNE À GUIDAGE D'UN RESSORT DE RAPPEL AGISSANT EN TORSION**
VENTIL MIT BEI TORSION WIRKENDEN FÜHRUNG EINER RÜCKSTELLFEDER
VALVE WITH GUIDING OF A RETURN SPRING ACTING IN TORSION

(30) Priorité: 01.04.2014 FR 1452879
(43) Date de publication de la demande: 08.02.2017
(73) Titulaire: Valeo Systèmes De Contrôle Moteur, 95800 Cergy Saint Christophe (FR)
(72) Inventeur: GAUTIER, Sylvain, F-95300 Ennery (FR); RIBERA, Frédéric, F-78260 Acheres (FR)
(74) Mandataire: Garcia, Christine
(86) Numéro de dépôt international: PCT/FR2015/050831
(87) Numéro de publication internationale: WO 2015/150691

(56) Documents cités:
- EP-A2- 1 170 487
- EP-A2- 1 455 069
- FR-A1- 2 914 975
- US-A1- 2005 022 365

## Description

L'invention concerne une vanne, notamment une vanne destinée à être mise en œuvre dans le domaine automobile. L'invention vise plus particulièrement une vanne de recirculation des gaz d'échappement, ou vanne EGR, de l'anglais « Exhaust Gas Recirculation ».

Dans le domaine automobile, il est connu de mettre en œuvre des vannes comprenant un organe de commande de l'ouverture de la vanne, par exemple une roue à secteur denté, qui tourne à l'encontre d'un ressort de rappel agissant en torsion. Le ressort de rappel permet de rappeler l'organe de commande dans la position déterminée, une fois l'actionnement de l'organe de commande terminé. Le ressort de rappel permet également de maintenir l'organe de commande dans une position déterminée en l'absence d'actionnement, malgré les vibrations auxquelles la vanne peut être soumise.

Une telle vanne peut notamment être du type à papillon. Dans ce cas, la rotation du volet ou papillon peut être directement commandée par la rotation de l'organe de commande. En d'autres termes, le papillon peut être solidaire en rotation de l'organe de commande.

En variante, une telle vanne peut être du type à soupape se déplaçant en translation ou selon un mouvement hélicoïdal, par rapport à un siège de vanne qu'elle obture sélectivement. Dans ce cas, un dispositif est interposé fonctionnellement entre l'organe de commande et la tige de soupape, qui transforme la rotation de l'organe de commande en translation, respectivement en mouvement hélicoïdal, de la tige de soupape.

Il est par exemple connu une vanne EGR de ce type des documents EP 1 455 069 A2, US 2005/022365 A1 ou FR-A-2 914 975 et FR-A-2 947 027, au nom de la Demanderesse. Ces documents décrivent des exemples de vannes de recirculation « EGR » destinées à adapter la quantité de gaz d'échappement réintroduite à l'admission d'un moteur à explosion, pour réduire les émissions polluantes, notamment les émissions d'oxydes d'azote, NOx.

La figure 1 illustre une vanne EGR selon la demande FR-A-2 947 027.

La vanne 100 comporte une soupape 102 qui permet l'introduction et le dosage des gaz d'échappement, dans le conduit d'admission d'un moteur à combustion d'un véhicule automobile. La vanne 100 comporte un moteur électrique 104 engrenant une roue de transmission 106. La roue de transmission 106 engrène un organe de commande 108, ici une roue à secteur denté.

Au moyen d'une came à chemin de came 110, les mouvements de rotation de la roue à secteur denté 108 sont transformés en mouvement de va-et-vient de la soupape 102 par rapport à un siège de vanne. Cependant, la roue à secteur denté 108 est rappelée en position de fermeture de la vanne 100 par un ressort de rappel 112, agissant en torsion.

Pour assurer la liaison entre le ressort de rappel 112 et la roue à secteur denté 108, cette dernière présente une projection radiale 114 terminée par une patte rabattue 116 s'étendant essentiellement selon la direction de l'axe A de rotation de la roue à secteur denté 108 et une direction orthoradiale par rapport à la roue à secteur denté 108. La patte rabattue 116 est percée d'un trou 118 recevant une extrémité 120 du ressort de rappel 112. L'extrémité 120 du ressort de rappel 112, droite, s'étend essentiellement radialement vers l'extérieur de la roue à secteur denté 108.

Un tel montage du ressort de rappel dans la roue à secteur denté est relativement complexe, nécessitant une intervention manuelle sur la chaîne de montage pour mettre en place l'extrémité du ressort de rappel dans le trou formé dans la projection radiale de la roue à secteur denté.

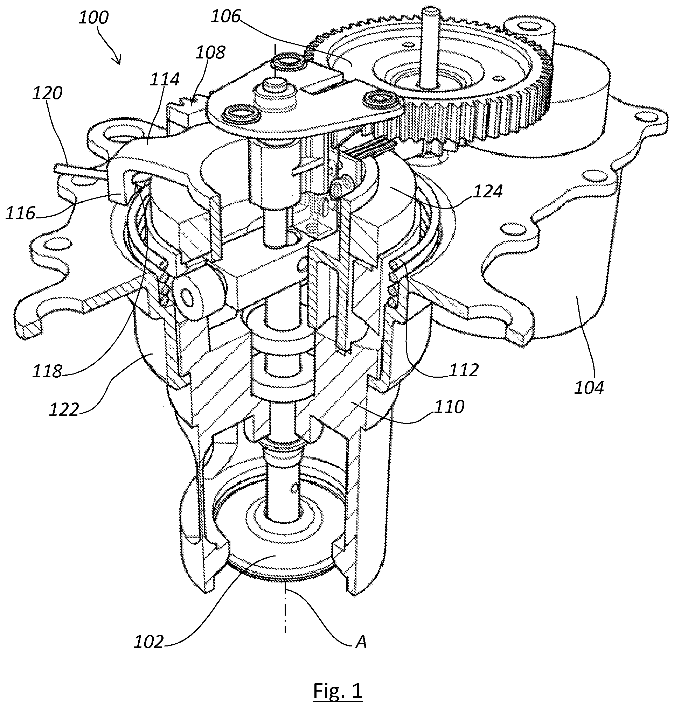

Surtout, comme cela est visible sur la figure 1, le ressort de rappel 112 est reçu dans une gorge entre la roue à secteur denté 108, la came 110 et un organe 122 de support de la vanne 100. En cas de pivotement de la roue à secteur denté 108, le ressort de rappel 112 a tendance à se déformer en réduisant son rayon de courbure. Par suite, le ressort de rappel 112 peut se bloquer dans la gorge, notamment au niveau d'un logement de réception d'un roulement 124 permettant la rotation de la roue à secteur denté 108 par rapport à la came 110. Ce blocage nuit à l'effet du ressort de rappel 112, de sorte qu'il peut empêcher la fermeture de la vanne et provoquer, indirectement, une panne moteur du fait de l'admission d'une trop grande quantité de gaz d'échappement dans le moteur. Ce blocage du ressort peut également limiter voire empêcher la rotation de la roue à secteur denté 108 par rapport à la came 110, rendant la vanne 100 inopérante.

L'invention a pour but de proposer une vanne EGR, et de manière plus générale, une vanne, notamment une vanne pour véhicule automobile, ne présentant pas les inconvénients susmentionnés. Notamment, l'invention vise à fournir une vanne présentant une fiabilité accrue.

À cet effet, l'invention propose une vanne, notamment une vanne pour véhicule automobile telle qu'une vanne de recirculation des gaz d'échappement, selon la revendication 1.

Ainsi, avantageusement, le relief de guidage empêche une déformation excessive du ressort de rappel propre à le faire se bloquer à l'intérieur de la vanne. Le relief de guidage, en guidant la déformation du ressort de rappel, assure ainsi l'efficacité du ressort de rappel et la fiabilité de la vanne.

Selon des modes de réalisation préférés, la vanne peut présenter une ou plusieurs des caractéristiques suivantes, prises seules ou en combinaison :
- le ou les reliefs de guidage comportent au moins une nervure, de préférence au moins deux nervures, continues ou discontinues, de préférence encore en arc de cercle ;
- le ou les reliefs de guidage présentent une hauteur adaptée pour guider au moins une spire du ressort de rappel, de préférence deux spires du ressort de rappel ;
- un relief de guidage s'étend sur un même secteur angulaire qu'un secteur denté de la roue à secteur denté ;
- la roue à secteur denté comporte, au moins au niveau d'un secteur denté, une rampe de protection destinée à coopérer avec le ressort de rappel, la rampe de protection présentant une surface, orientée vers le ressort de rappel, hélicoïdale ;
- les dents de la roue à secteur denté sont de hauteur constante ;
- la vanne comprend une came à chemin de came, montée pivotante par rapport à la roue à secteur denté, la came étant disposée radialement à l'intérieur du ou des reliefs de guidage de la roue à secteur denté ;
- le ressort de rappel comprend un premier élément de liaison, par exemple un crochet ouvert dans la direction circonférentielle par rapport à la roue à secteur denté, adapté à coopérer avec un deuxième élément de liaison de la roue à secteur denté, par exemple une surface d'appui de la roue à secteur denté, les premier et deuxième éléments de liaison étant conformés pour pouvoir relier ensemble le ressort de rappel et la roue à secteur denté, par rotation de la roue à secteur denté par rapport au ressort de rappel depuis une position où le ressort de rappel et la roue à secteur denté sont fonctionnellement indépendants ;
- la roue à secteur denté comporte, à l'extrémité radialement externe de la surface d'appui, une projection s'étendant dans la direction de l'axe de rotation de la roue à secteur denté et/ou dans une direction orthoradiale par rapport à la roue à secteur denté ;
- la roue à secteur denté est adaptée à être entrainée en rotation entre une position correspondant à la fermeture de la vanne et au moins une position correspondant à une ouverture de la vanne ;
- la vanne comprend un attelage solidaire en rotation de la roue à secteur denté et guidé par un chemin de came dans une came, et une tige de soupape solidaire en translation de l'attelage ;
- la roue à secteur denté est solidaire en rotation d'un volet d'obturation d'un passage dans la vanne ;
- la vanne comporte en outre un moteur d'actionnement pour entraîner en rotation la roue à secteur denté, éventuellement via une roue de transmission ; et
- la roue à secteur denté présente au moins un renfoncement radial, la surface d'appui étant formée de préférence au niveau d'un bord du renfoncement radial.

L'invention sera mieux comprise à la lumière de la description qui va suivre, description faite en référence aux dessins annexés, parmi lesquels :
- la figure 1 représente en perspective, une vue partiellement arraché d'une vanne EGR ;
- les figures 2 et 3 représentent schématiquement en perspective, un dispositif de transformation de mouvement pour une vanne EGR, respectivement en vue éclatée et assemblé ;
- les figures 4 et 5 représentent selon des perspectives différentes, un détail du dispositif de transformation de mouvements de la figure 3 ;
- la figure 6 représente schématiquement une vue en coupe d'une roue à secteur denté du dispositif de transformation de mouvements de la figure 3 ; et
- les figures 7 à 9 représentent schématiquement des vues latérales de la roue à secteur denté de la figure 6, ces vues étant décalées angulairement.

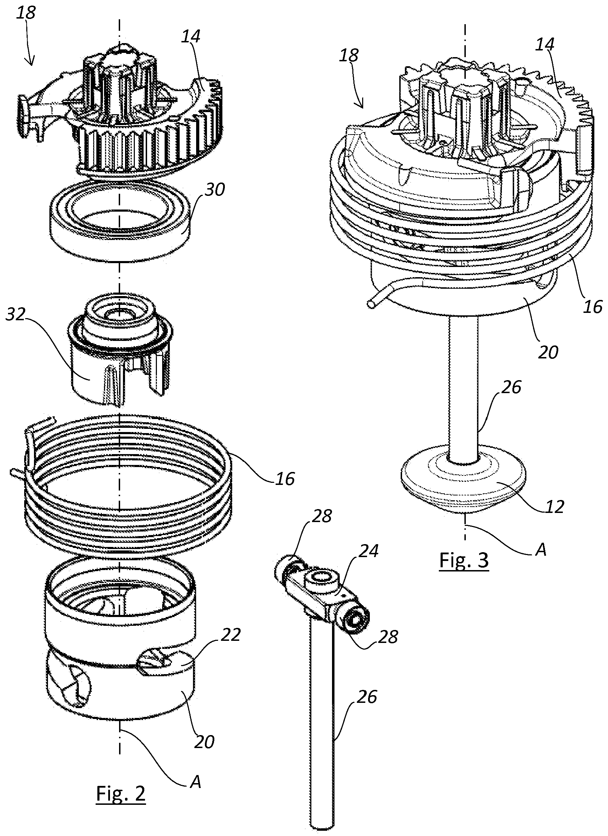

Dans la suite, on décrit une vanne, par exemple une vanne EGR pour véhicule automobile, dont une portion est illustrée aux figures 2 et 3.

Cette vanne comporte une soupape 12 qui permet l'introduction et le dosage d'un fluide, ici les gaz d'échappement, dans une canalisation, ici l'admission. La vanne est du type comprenant un organe de commande 14 tournant à l'encontre d'un ressort de rappel 16 agissant en torsion.

La vanne comporte tout d'abord un corps de vanne formant un conduit pour les gaz d'échappement à faire recirculer. Le corps de vanne peut également former un conduit pour une circulation d'eau de refroidissement de la vanne. Le corps peut présenter des trous de fixation de la vanne à un bloc motopropulseur d'un véhicule automobile. De tels trous de fixation peuvent notamment être réalisés dans des collerettes entourant les débouchés du conduit de circulation d'eau de refroidissement permettant ainsi d'intégrer le conduit de circulation d'eau de refroidissement de la vanne dans le conduit de circulation d'eau de refroidissement du moteur sur laquelle la vanne est fixée. De tels trous de fixation peuvent également être réalisés dans des collerettes entourant les débouchés d'un conduit de recirculation de gaz d'échappement.

La vanne comporte également un moteur qui peut être monté dans un logement formé par le corps de vanne. Le moteur engrène une roue de transmission. La roue de transmission engrène à son tour l'organe de commande 14, ici une roue à secteur denté. Le moteur est ainsi adapté à entraîner en rotation la roue à secteur denté 14.

Le mouvement de rotation de la roue à secteur denté 14 est transformé en mouvement de va-et-vient de la soupape 12 grâce à un dispositif de transformation de mouvements 18. Par mouvement de va-et-vient, on entend ici un mouvement comprenant une translation selon un axe, éventuellement combinée à une rotation par rapport à ce même axe.

Le dispositif de transformation de mouvements 18 comporte à cet effet, à l'intérieur d'un organe support formé par le corps de vanne, une came 20 à chemin de came 22 (ou came cylindrique), un barreau 24 (ou attelage) coopérant avec le chemin de came 22 de la came cylindrique 20, le barreau 24 étant fixé à l'extrémité d'une tige 26 solidaire de la soupape 12. Pour guider la tige 26 dans le corps de vanne, il peut être prévu un ou plusieurs paliers entre la tige 26 et le corps de vanne. Il peut être prévu un jeu entre la tige 26 et le barreau 24 pour permettre une rotation de la tige par rapport au barreau, autour de l'axe de la tige, le barreau et la tige étant solidaire en translation selon la direction de l'axe de la tige.

Le chemin de came 22 est ici formé de deux pistes identiques, de part et d'autre d'une paroi tubulaire de la came cylindrique 20. Le barreau 24 est muni à chacune de ses extrémités d'un galet 28 coopérant avec le chemin de came de sorte que, lorsque la roue à secteur denté 14 est entraînée en rotation, celle-ci entraîne à son tour le barreau 24 en rotation provoquant, grâce au parcours des galets 28 dans le chemin de came 22, la translation, ou tout du moins le va-et-vient, de la soupape 12. La soupape 12, la tige 26 et le barreau 24 sont solidaires en translation dans la direction de l'axe A de déplacement de la soupape 12, cette translation répondant à la rotation de la roue à secteur denté 14 autour de ce même axe A.

Entre la roue à secteur denté 14 et la came cylindrique 20, il est disposé un palier 30, ici un roulement à billes, pour permettre la rotation de la roue à secteur denté 14 par rapport à la came cylindrique 20.

Par ailleurs, la roue à secteur denté 14 est solidaire en rotation d'une jupe 32 prévue pour coopérer avec le barreau 24. Cette jupe 32 comporte deux parois longitudinales symétriques et s'étendant essentiellement parallèlement à la direction A de rotation de la roue à secteur denté 14 et de translation de la soupape 12. Les deux parois longitudinales définissent entre elles un logement pour le barreau 24. Ainsi, le barreau 24 est disposé dans le logement de sorte que la roue à secteur denté 14 soit apte à entraîner en rotation le barreau 24 par l'intermédiaire des parois longitudinales de la jupe 32, et que le barreau 24 soit libre de coulisser dans le logement dans la direction de translation de la soupape 12.

Par conséquent, au sein de la vanne, la rotation de la roue à secteur denté 14 entraîne la rotation du barreau 24 dont les galets 28 roulent alors sur le chemin de came 22 de la came cylindrique 20, fixe, ce qui entraîne conjointement un mouvement de la soupape 12 dans la direction de l'axe A, de déplacement de la soupape 12 et de rotation de la roue à secteur denté 14, entre une position de la soupape 12 correspondant à une fermeture de la vanne et au moins une position de la soupape correspondant à une ouverture de vanne, étant entendu qu'à chaque position de la soupape 12 correspond une unique position angulaire distincte de la roue à secteur denté 14.

Pour rappeler la soupape 12 en position de fermeture de la vanne, et/ou la maintenir dans cette position en l'absence d'actionnement par le moteur, la roue à secteur denté 14 est reliée à l'organe de support au moyen d'un ressort de rappel 16 agissant en torsion. Ainsi, l'ouverture de la vanne 10 est commandée par la rotation de la roue à secteur denté 14, organe de commande, elle-même provoquée par la rotation du moteur, organe d'actionnement, à l'encontre d'une force de rappel exercée sur la roue à secteur denté 14 par le ressort de rappel 16.

Le ressort de rappel 16 est ici un ressort hélicoïdal d'axe A correspondant à l'axe de rotation de la roue à secteur denté 14. Le ressort de rappel 16 est relié, à une extrémité, à l'organe de support et, à l'autre extrémité, à la roue à secteur denté 14, de telle sorte de la rotation de la roue à secteur denté 14 commandant l'ouverture de la vanne provoque une torsion du ressort de rappel 16. En particulier, le ressort de rappel 16 peut être relié à l'organe support du fait qu'une de ses extrémités, pliée dans le sens opposé du reste de l'enroulement hélicoïdal du ressort de rappel 16, est reçue dans un trou dans l'organe de support ou coopère avec une butée formée à cet effet par le ressort de rappel 16. Le ressort de rappel 16 est ici reçu dans un logement sensiblement cylindrique délimité par l'organe de support, la came cylindrique 22 et la roue à secteur denté 14.

Le moteur coupé, le ressort de rappel 16 exerce un effort de rappel rappelant la roue à secteur denté 14 dans sa position correspondant à la position de fermeture de la vanne. Cette position de la roue à secteur denté 14 correspondant à la fermeture de la vanne peut correspondre à un état précontraint du ressort de rappel 16. En d'autres termes, dans la position de la roue à secteur denté 14 correspondant à la fermeture de la vanne, le ressort de rappel 16 exerce un effort sur la roue à secteur denté 14 tendant à la faire tourner. Cependant, la rotation de la roue à secteur denté 14 au-delà de la position correspondant à la fermeture de la vanne est empêchée du fait que la soupape 12 est en buté contre un siège de vanne.

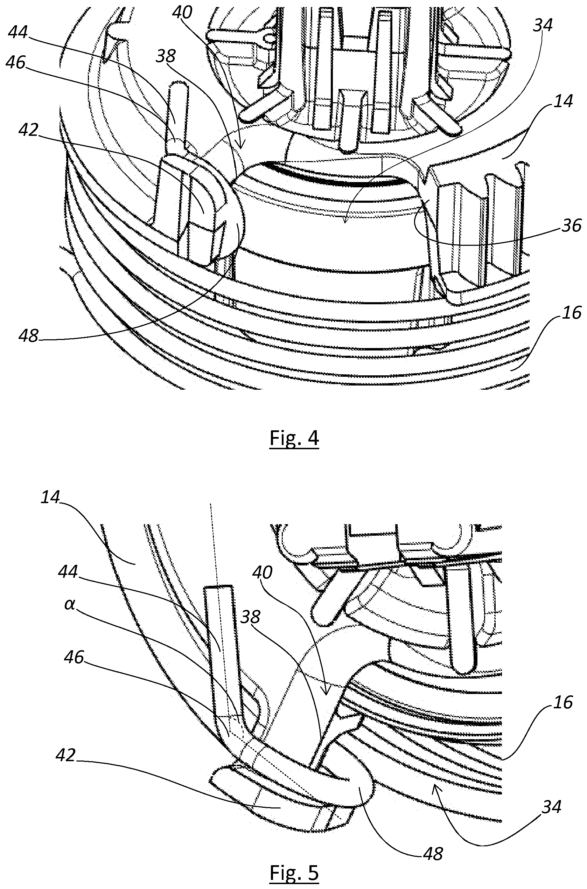

On va maintenant décrire plus spécifiquement comment le ressort de rappel 16 est relié à la roue à secteur denté 14, en regard des figures 4 et 5.

Il est à noter, tout d'abord, que l'axe A de rotation de la roue à secteur denté 14 permet de définir, pour tout point considéré de la roue à secteur denté ou du dispositif de transformation de mouvements 18 :
- une direction radiale qui s'étend depuis l'axe A de rotation de la roue à secteur denté 14, vers le point considéré, dans le plan normal à l'axe A de la roue à secteur denté 14 comprenant le point considéré ; et
- une direction orthoradiale, perpendiculaire à la direction radiale et s'étendant dans le plan normal à l'axe A de rotation de la roue à secteur denté 14 comprenant le point considéré.

Comme cela est plus particulièrement visible sur la figure 4, la roue à secteur denté 14 comporte un renfoncement radial 34. En d'autres termes, sur un secteur angulaire défini, la roue à secteur denté 14 présente un rayon inférieur à un autre secteur angulaire défini, notamment au secteur angulaire sur lequel sont formées les dents d'engrènement du secteur denté.

Le renfoncement radial 34 s'étend entre deux bords sensiblement radiaux 36, 38. En l'espèce, le premier bord radial 36 délimite le secteur denté de la roue à secteur denté 14.

Le deuxième bord radial 38 est formé au niveau d'une zone arrondie 40 de la roue à secteur denté 14 (ou surface d'appui). L'arrondi du deuxième bord radial 38 est essentiellement défini par rapport à un axe radial par rapport à la roue à secteur denté 14.

À l'extrémité radialement externe du deuxième bord radial 38, la roue à secteur denté 14 comporte une projection 42. La projection 42 s'étend ici à la fois selon la direction de l'axe A de rotation de la roue à secteur denté 14 et dans une direction orthoradiale. En d'autres termes, la projection 42 forme un bourrelet (ou aileron) à l'extrémité radialement externe du deuxième bord radial 38. La projection fait en effet saillie par rapport à la surface d'appui 40, à la fois :
- dans la direction de l'axe A de rotation de la roue à secteur denté, et
- dans la direction orthoradiale.

En d'autres termes encore, la projection 42 s'étend :
- en-dessus et/ou en-dessous (dans la direction de l'axe A de rotation de la roue à secteur denté 14) de la surface d'appui 40 ; et
- en saillie dans le renfoncement radial 34, dans la direction orthoradiale, par rapport à la surface d'appui 40.

Cependant, l'extrémité 44 du ressort de rappel 16, destinée à coopérer avec la roue à secteur denté 14, s'étend radialement vers l'intérieur du ressort de rappel 16. Pour ce faire, le ressort de rappel 16 présente un coude 46 au niveau duquel le ressort de rappel 16 est plié ou courbé autour d'un axe parallèle à l'axe A de rotation de la roue à secteur denté 14. Le coude 46 forme de préférence, dans un plan normal à l'axe A de rotation de la roue à secteur denté, un angle α obtus non plat. L'angle α peut ainsi être supérieur à 100°, de préférence supérieur à 120°, et/ou inférieur à 170°, de préférence inférieur à 160°. Un angle aigu a en effet tendance à empêcher le glissement de l'extrémité du ressort sur la roue à secteur denté, alors qu'un angle trop plat ne permet pas d'obtenir un gain significatif quant au maintien en position de l'extrémité du ressort.

En outre, entre le coude 46 et l'enroulement hélicoïdal du ressort de rappel 16, ce dernier présente un crochet 48. Le crochet 48 est ouvert dans la direction circonférentielle de la roue à secteur denté 14. Ici, ce crochet 48 est réalisé par une portion du ressort de rappel 16 qui est courbée autour d'un axe radial par rapport à la roue à secteur denté 14 (ou le ressort de rappel 16). Le crochet 48 est ainsi semblable à un anneau droit sur le côté du ressort de rappel 16. De préférence, le crochet 48 est réalisé par une portion du ressort de rappel 16 telle que le coude 46 est situé, le long du ressort de rappel 16, entre le crochet 48 et l'extrémité 44 du ressort de rappel 16 qui est la plus proche du crochet.

Ici, la courbure (c'est-à-dire l'inverse du rayon de courbure) de la portion du ressort de rappel 16 formant le crochet 48 peut être inférieure à la courbure de la zone d'appui 40, au niveau du deuxième bord radial 38, les deux courbures étant mesurées autour d'un axe sensiblement radial par rapport à la roue à secteur denté 14. Ceci permet en effet une insertion facilitée de la roue à secteur denté 14 dans l'ouverture du crochet 48. Cependant, en variante, la courbure du crochet 48 peut, initialement, être supérieure ou égale à la courbure de la zone d'appui pour obtenir un effet de clippage du ressort de rappel 16 sur la roue à secteur denté 14.

Ainsi, et comme cela apparaîtra de la description qui va suivre du montage de la vanne, le crochet 48 et la roue à secteur denté 14, notamment la zone d'appui 40, sont conformés pour pouvoir relier ensemble le ressort de rappel 16 et la roue à secteur denté 14, par rotation de la roue à secteur denté 14 par rapport au ressort de rappel 16, de préférence d'un angle au moins égal à 20°, de préférence encore au moins égal à 25°, depuis une position où le ressort de rappel 16 et la roue à secteur denté 14 sont fonctionnellement indépendants. Par fonctionnellement indépendants, on entend que le ressort de rappel n'exerce pas d'effort de rappel en torsion sur la roue à secteur denté 14. En d'autres termes, depuis une position où le ressort n'exerce pas d'effort de rappel en torsion sur la roue à secteur denté 14, on réalise la mise en fonction du ressort de rappel 16 par simple rotation de la roue à secteur denté 14. Le montage du ressort de rappel 16 s'en trouve facilité.

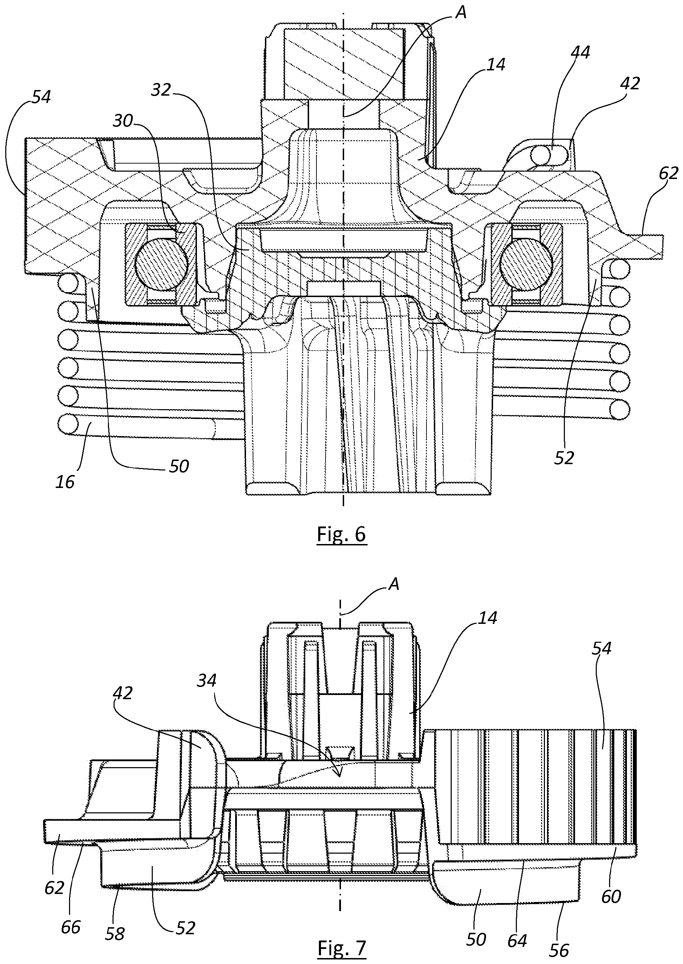

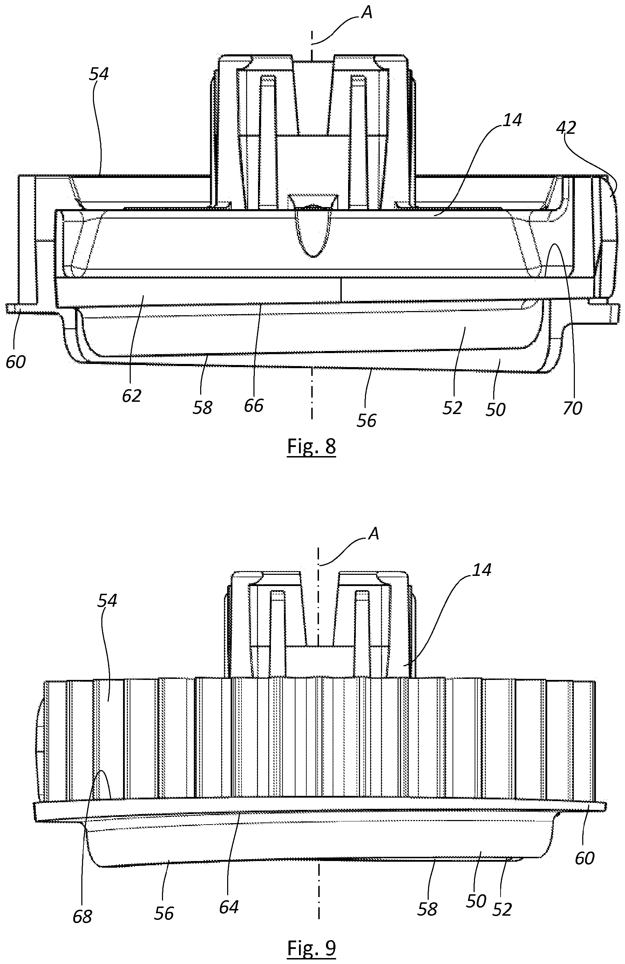

Par ailleurs, la roue à secteur denté 18 présente sur sa face orientée vers le ressort de rappel 16, deux reliefs 50, 52 de guidage du ressort de rappel 16, plus particulièrement visibles sur les figures 6 à 9.

Les reliefs de guidage sont réalisés ici sous forme de deux nervures 50, 52. Par nervure, on entend ici une partie en saillie par rapport à la face dont elle est issue. Les deux nervures 50, 52 sont ici courbes, en arc de cercle. Ici, les bases des deux nervures 50, 52 sont inscrites dans un même cercle, de rayon sensiblement inférieur au rayon de la partie hélicoïdale du ressort de rappel 16. Par sensiblement inférieur, on entend ici que la différence est au moins égale au rayon de la section transversale du fil formant le ressort hélicoïdale 16 et, de préférence, au plus égal à son diamètre. Par base, on entend ici l'intersection des nervures 50, 52 avec la face de la roue à secteur denté 14 dont elles sont issues.

La première nervure 50 s'étend ici sur le même secteur angulaire que celui sur lequel s'étend le secteur denté 54 de la roue à secteur denté 14. Ainsi, la première nervure 50 s'étend ici entre deux renfoncements radiaux 34, entre lesquels s'étend le secteur denté 56.

La deuxième nervure 52 s'étend symétriquement, par rapport à l'axe A de rotation de la roue à secteur denté 14, par rapport à la première nervure 50.

Ces nervures sont destinées à venir radialement à l'intérieur du ressort de rappel 16 pour le guider de manière qu'il ne puisse pas se bloquer et ainsi empêcher la rotation de la roue à secteur denté 14 par rapport à la came 20.

Afin d'améliorer encore la stabilité de la position du ressort de rappel 16, la hauteur des nervures 50, 52 est de préférence choisie pour qu'au moins une boucle ou spire, de préférence au moins deux, de préférence encore exactement deux boucles, soi(en)t reçue(s) radialement à l'extérieur des nervures 50, 52. Pour ce faire, ici, la hauteur des nervures 50, 52, mesurée depuis la face de la roue à secteur denté 14, parallèlement à l'axe A de rotation de la roue à secteur denté 14, est sensiblement égale à la somme du pas de l'enroulement hélicoïdal du ressort de rappel 16 et du diamètre du fil formant le ressort de rappel 16. Il est à noter ici que la hauteur des nervures 50, 52 est de préférence limitée pour des raisons d'encombrement de la vanne. L'arête sommitale 56, 58 de chacune des nervures 50, 52 est hélicoïdale.

Pour améliorer encore la stabilité de la position du ressort de rappel, la surface de la roue à secteur denté 14, dont sont issues les nervures 52, 56, forme des rampes 60, 62 dont la surface 64, 66 destinée à coopérer avec le ressort de rappel 16 est hélicoïdale. Ainsi, on peut augmenter la longueur du ressort de rappel 16 en appui sr les surfaces 64, 66 des rampes 60, 62.

Comme illustrées, les rampes hélicoïdales 60, 62 ont de préférence une hauteur variable de sorte que leur face 68, 70, opposée à leur face 64, 66 destinée à coopérer avec le ressort de rappel 16, est sensiblement normale à la direction de l'axe de rotation A de la roue à secteur dentée 14. On peut notamment obtenir ainsi une denture 54 de hauteur constante, qui contribue à la fiabilité de l'engrènement de la roue à secteur denté 14 par la roue de transmission et le moteur d'entraînement. Les rampes hélicoïdales 60, 62 présentent en outre un diamètre minimum sensiblement égal au diamètre du ressort de rappel 16, les rampes hélicoïdales 60, 62 s'étendant de préférence radialement à l'intérieur et à l'extérieur du ressort de rappel 16, pour assurer une coopération efficace avec le ressort de rappel 46.

Enfin, les rampes 60, 62 s'étendent de préférence radialement à l'intérieur et à l'extérieur du ressort de rappel 16, pour éviter tout risque de blocage du ressort de rappel et/ou de la roue à secteur denté, même si le ressort de rappel est légèrement désaxé. En particulier, la rampe 60, située au niveau du secteur denté 54, peut s'étendre radialement jusqu'au sommet radialement le plus extérieur des dents du secteur denté 54, pour éviter toute interférence du ressort de rappel 16 avec le secteur denté 54.

Le fonctionnement d'une vanne comprenant un dispositif de transformation de mouvements 18 tel que décrit ci-avant est sensiblement identique au fonctionnement d'une vanne décrite en regard de la figure 1.

Cependant, la vanne comprenant un dispositif de transformation de mouvements 18 présente l'avantage qu'elle peut être assemblée de manière plus aisée.

Dans un premier temps, on assemble les différents éléments constituant le dispositif de transformation de mouvements 18. Notamment, on dispose le ressort de rappel 16 de telle sorte que l'ouverture du crochet 48 soit sensiblement en vis-à-vis de la zone d'appui 40. Ici, si le rayon initial du ressort de rappel 16, avant qu'il ne soit contraint en torsion, est sensiblement supérieur au rayon de la roue à secteur denté 14, au niveau du deuxième bord latéral 38, il est possible de positionner l'ouverture du crochet 48, orientée vers le deuxième bord latéral 38, une partie au moins de l'extrémité 44 du ressort de rappel 16 étant reçue au droit (dans la direction de l'axe A de rotation de la roue à secteur denté 14) du renfoncement radial 34. Ceci est réalisé ici du fait que l'extrémité 34 s'étend radialement vers l'intérieur par rapport à l'enroulement hélicoïdal du ressort de rappel 16.

Par ailleurs, on s'assure à cette étape que les nervures 50, 52 sont reçues radialement à l'intérieur du ressort de rappel 16, le ressort de rappel 16 étant en appui sur les surfaces hélicoïdales 64, 66 des rampes 60, 62 de la roue à secteur denté 14.

Il est à noter ici que l'assemblage des différents éléments constituant le dispositif de transformation de mouvements 18 peut être réalisé de sorte que le crochet 48 du ressort de rappel 16 ne soit pas, dans un premier temps, reçu au droit du renfoncement radial 34. Le crochet peut notamment être reçu sous la roue à secteur denté 14. Il convient alors de faire tourner la roue à secteur denté 14, dans la direction opposée à la direction de la force de rappel du ressort de rappel pour se ramener à la configuration de la figure 6. La rotation de la roue à secteur denté 14 peut être réalisée à l'aide du moteur d'actionnement de la vanne ou, de préférence, par un moteur externe à la vanne sur la chaîne de montage.

Puis, on fait tourner la roue à secteur denté 14. Ici, du fait que l'extrémité 44 du ressort de rappel 16 s'étend radialement vers l'intérieur de l'enroulement hélicoïdal du ressort de rappel 16, cette extrémité 44 peut coopérer avec l'aileron 42 pour guider l'extrémité 44 du ressort de rappel 16 et le crochet 48, radialement vers l'intérieur de la roue à secteur denté 14 au fur et à mesure de la rotation de la roue à secteur denté 14.

En continuant à faire tourner la roue à secteur denté 14, on arrive à une configuration où le crochet 48 est en appui sur la zone d'appui 40. Ainsi, la position de l'extrémité 44 du ressort de rappel 16 et, de manière plus générale, la liaison du ressort de rappel 16 avec la roue à secteur denté 14 sont assurée : le ressort de rappel 16 peut dans cette position exercer un effort de rappel sur la roue à secteur denté 14. De plus, dans cette position, l'aileron 42 est également en contact, radialement à l'intérieur, avec le crochet 48. Le crochet 48 ne peut ainsi pas se déplacer radialement par rapport à la roue à secteur denté 14. Ainsi, l'aileron 42 évite tout risque d'échappement du ressort de rappel 16.

En continuant encore la rotation de la roue à secteur denté, on contraint le ressort de rappel 16 en torsion. Le diamètre du ressort de rappel 16 est diminué, par exemple jusqu'à ce que le ressort de rappel vienne en appui sur la surface radialement externe des nervures 50, 52 de la roue à secteur denté 14, ce qui assure le guidage du ressort de rappel 16 au cours de ses torsions ultérieures.

Bien entendu, la présente invention ne se limite pas à la description ci-dessus. De nombreuses variantes de réalisation sont accessibles à l'homme de l'art, dans le cadre de l'invention définie par le jeu de revendications ci-joint.

En particulier, pour améliorer encore la liaison du ressort de rappel 16 avec la roue à secteur denté 14 ou en variante à l'aileron 42, il peut être prévu une rainure de réception de l'extrémité 44 dans la roue à secteur denté 14.

L'extrémité 44 du ressort de rappel 16 peut ne pas s'étendre radialement vers l'intérieur, même si cette solution présente l'avantage de limiter l'encombrement de la vanne 10, le ressort de rappel 16 ne faisant par saillie radialement par rapport à la roue à secteur denté 14. La présence d'un coude 46 est en tout état de cause préférée pour assurer une bonne stabilité de la liaison entre le ressort de rappel 16 et la roue à secteur denté 14.

Également, le diamètre du ressort de rappel 16 peut, avant la liaison du ressort de rappel 16 avec la roue à secteur denté 14, être inférieur au diamètre de la roue à secteur denté 14 au niveau du deuxième bord latéral 38. Le crochet 48 peut ainsi être reçu dans le renfoncement radial 34 de la roue à secteur denté 14. L'ouverture du crochet 48 peut alors être disposée en vis-à-vis de la surface d'appui 40.

La zone d'appui est ici formée au niveau d'un bord latéral radial d'un renfoncement radial dans la roue à secteur denté. Cependant, de nombreuses variantes de zone d'appui peuvent être imaginées par l'homme du métier.

Le crochet 48, également, qui est ici formé par une portion courbée du ressort de rappel 16, peut prendre de nombreuses autres formes. Il peut ainsi, par exemple, être réalisé par pliage, notamment. Dans ce cas, le crochet 48 présente au moins un angle.

Il peut également être imaginé de remplacer le crochet du ressort de rappel et la surface d'appui de la roue à secteur denté par d'autres premier et deuxième éléments de liaison. Par exemple, les premier et deuxième éléments de liaison peuvent être des aimants fixés respectivement au ressort de rappel et à la roue à secteur denté. On peut également imaginer que le ressort comporte un brin radial qui coopère avec un logement en « V » dans la roue à secteur denté.

Par ailleurs, le relief de guidage du ressort de rappel peut prendre de nombreuses formes différentes accessibles à l'homme de l'art. Il peut par exemple être discontinu, formé de picots, suivre une autre courbe de base que des arcs de cercle.

Enfin, l'exemple décrit ci-avant se rapporte à une vanne à soupape et à dispositif de transformation des mouvements de rotation d'un organe de commande en va-et-vient de la soupape. En variante, la vanne peut être du type à papillon, l'organe de commande étant alors de préférence solidaire en rotation du papillon (ou volet).

## Revendications

1. Vanne, notamment vanne pour véhicule automobile telle qu'une vanne de recirculation des gaz d'échappement, comprenant une roue à secteur denté (14) tournant à l'encontre de l'action d'un ressort de rappel (16) agissant en torsion, la rotation de la roue à secteur denté (14) commandant l'ouverture et la fermeture de la vanne, la roue à secteur denté (14) présentant, sur une de ses faces, au moins un relief (50, 52) de guidage du ressort de rappel (16), de préférence disposé radialement à l'intérieur du ressort de rappel (16), la vanne étant **caractérisée en ce que** une arête sommitale (56 ; 58) du ou des reliefs de guidage (50 ; 52) est hélicoïdale.

2. Vanne selon la revendication 1, dans laquelle le ou les reliefs de guidage comportent au moins une nervure (50 ; 52), de préférence au moins deux nervures (50, 52), continues ou discontinues, de préférence encore en arc de cercle.

3. Vanne selon l'une des revendications 1 ou 2, dans laquelle le ou les reliefs de guidage (50 ; 52) présentent une hauteur adaptée pour guider au moins une spire du ressort de rappel (16), de préférence deux spires du ressort de rappel (16).

4. Vanne selon l'une quelconque des revendications précédentes, dans laquelle un relief de guidage (50) s'étend sur un même secteur angulaire qu'un secteur denté (54) de la roue à secteur denté (14).

5. Vanne selon l'une quelconque des revendications précédentes, dans laquelle la roue à secteur denté (14) comporte, au moins au niveau d'un secteur denté (54), une rampe de protection (60 ; 62) destinée à coopérer avec le ressort de rappel (16), la rampe de protection (60 ; 62) présentant une surface (64 ; 66), orientée vers le ressort de rappel (16), hélicoïdale.

6. Vanne selon l'une quelconque des revendications précédentes, dans laquelle les dents de la roue à secteur denté (14) sont de hauteur constante.

7. Vanne selon l'une quelconque des revendications précédentes, comprenant une came (20) à chemin de came (22), montée pivotante par rapport à la roue à secteur denté (14), la came (20) étant disposée radialement à l'intérieur du ou des reliefs de guidage (50 ; 52) de la roue à secteur denté (14).

8. Vanne selon l'une quelconque des revendications précédentes, dans laquelle le ressort de rappel (16) comprend un premier élément de liaison, par exemple un crochet (48) ouvert dans la direction circonférentielle par rapport à la roue à secteur denté (14), adapté à coopérer avec un deuxième élément de liaison de la roue à secteur denté (14), par exemple une surface d'appui (40) de la roue à secteur denté (14), les premier (48) et deuxième (40) éléments de liaison étant conformés pour pouvoir relier ensemble le ressort de rappel (16) et la roue à secteur denté (14), par rotation de la roue à secteur denté (14) par rapport au ressort de rappel (16) depuis une position où le ressort de rappel (48) et la roue à secteur denté (14) sont fonctionnellement indépendants.

9. Vanne selon la revendication 8, dans laquelle la roue à secteur denté (14) comporte, à l'extrémité radialement externe de la surface d'appui (40), une projection (42) s'étendant dans la direction de l'axe de rotation (A) de la roue à secteur denté (14) et/ou dans une direction orthoradiale par rapport à la roue à secteur denté (14).

10. Vanne selon l'une quelconque des revendications précédentes, dans laquelle la roue à secteur denté (14) est adaptée à être entrainée en rotation entre une position correspondant à la fermeture de la vanne et au moins une position correspondant à une ouverture de la vanne.

11. Vanne selon l'une quelconque des revendications précédentes, comprenant un attelage (24) solidaire en rotation de la roue à secteur denté (14) et guidé par un chemin de came (22) dans une came (20), et une tige de soupape (26) solidaire en translation de l'attelage (24).

12. Vanne selon l'une quelconque des revendications 1 à 10, dans laquelle la roue à secteur denté (14) est solidaire en rotation d'un volet d'obturation d'un passage dans la vanne.

13. Vanne selon l'une quelconque des revendications précédentes, comportant en outre un moteur d'actionnement pour entraîner en rotation la roue à secteur denté (14), éventuellement via une roue de transmission.

14. Vanne selon l'une quelconque des revendications précédentes, dans laquelle la roue à secteur denté (14) présente au moins un renfoncement radial (34), la surface d'appui (40) étant formée de préférence au niveau d'un bord (38) du renfoncement radial (34).

## Patentansprüche

1. Ventil, insbesondere Ventil für ein Kraftfahrzeug wie etwa ein Abgasrückführungsventil, welches ein Sektorzahnrad (14) umfasst, das sich entgegen der Wirkung einer Rückholfeder (16) mit Torsionswirkung dreht, wobei die Drehung des Sektorzahnrades (14) das Öffnen und das Schließen des Ventils steuert, wobei das Sektorzahnrad (14) auf einer seiner Seiten wenigstens eine Erhebung (50, 52) zur Führung der Rückholfeder (16) aufweist, die vorzugsweise radial innerhalb der Rückholfeder (16) angeordnet ist, wobei das Ventil **dadurch gekennzeichnet ist, dass** eine Scheitelkante (56; 58) der Führungserhebung(en) (50; 52) spiralförmig ist.

2. Ventil nach Anspruch 1, wobei die Führungserhebung(en) wenigstens eine Rippe (50; 52), vorzugsweise wenigstens zwei Rippen (50, 52), die durchgehend oder unterbrochen sind, aufweisen, die vorzugsweise außerdem kreisbogenförmig sind.

3. Ventil nach einem der Ansprüche 1 oder 2, wobei die Führungserhebung(en) (50; 52) eine Höhe aufweisen, die dafür ausgelegt ist, wenigstens eine Windung der Rückholfeder (16), vorzugsweise zwei Windungen der Rückholfeder (16) zu führen.

4. Ventil nach einem der vorhergehenden Ansprüche, wobei sich eine Führungserhebung (50) auf demselben Winkelsektor erstreckt wie ein Zahnsektor (54) des Sektorzahnrades (14).

5. Ventil nach einem der vorhergehenden Ansprüche, wobei das Sektorzahnrad (14) wenigstens an einem Zahnsektor (54) eine Schutzrampe (60; 62) aufweist, die dazu bestimmt ist, mit der Rückholfeder (16) zusammenzuwirken, wobei die Schutzrampe (60; 62) eine der Rückholfeder (16) zugewandte spiralförmige Fläche (64; 66) aufweist.

6. Ventil nach einem der vorhergehenden Ansprüche, wobei die Zähne des Sektorzahnrades (14) eine konstante Höhe aufweisen.

7. Ventil nach einem der vorhergehenden Ansprüche, welches einen Nocken (20) mit einer Nockenbahn (22) umfasst, der schwenkbar in Bezug auf das Sektorzahnrad (14) gelagert ist, wobei der Nocken (20) radial innerhalb der Führungserhebung(en) (50; 52) des Sektorzahnrades (14) angeordnet ist.

8. Ventil nach einem der vorhergehenden Ansprüche, wobei die Rückholfeder (16) ein erstes Verbindungselement umfasst, zum Beispiel einen in der Umfangsrichtung in Bezug auf das Sektorzahnrad (14) offenen Haken (48), das dafür ausgelegt ist, mit einem zweiten Verbindungselement des Sektorzahnrades (14), zum Beispiel einer Anlagefläche (40) des Sektorzahnrades (14), zusammenzuwirken, wobei das erste (48) und zweite (40) Verbindungselement so ausgebildet sind, dass sie die Rückholfeder (16) und das Sektorzahnrad (14) durch Drehung des Sektorzahnrades (14) in Bezug auf die Rückholfeder (16) aus einer Position, in der die Rückholfeder (48) und das Sektorzahnrad (14) funktional unabhängig sind, miteinander verbinden können.

9. Ventil nach Anspruch 8, wobei das Sektorzahnrad (14) am radial äußeren Ende der Anlagefläche (40) einen Vorsprung (42) aufweist, der sich in der Richtung der Drehachse (A) des Sektorzahnrades (14) und/oder in einer in Bezug auf das Sektorzahnrad (14) orthoradialen Richtung erstreckt.

10. Ventil nach einem der vorhergehenden Ansprüche, wobei das Sektorzahnrad (14) dafür ausgelegt ist, zwischen einer Position, die der Schließung des Ventils entspricht, und wenigstens einer Position, die einer Öffnung des Ventils entspricht, drehend angetrieben zu werden.

11. Ventil nach einem der vorhergehenden Ansprüche, welches eine Kupplung (24), die mit dem Sektorzahnrad (14) drehfest verbunden ist und von einer Nockenbahn (22) in einem Nocken (20) geführt wird, und einen Ventilschaft (26), der mit der Kupplung (24) verschiebefest verbunden ist, umfasst.

12. Ventil nach einem der Ansprüche 1 bis 10, wobei das Sektorzahnrad (14) mit einer Verschlussklappe eines Durchgangs in dem Ventil drehfest verbunden ist.

13. Ventil nach einem der vorhergehenden Ansprüche, welches außerdem einen Stellmotor aufweist, um das Sektorzahnrad (14), eventuell über ein Getrieberad, drehend anzutreiben.

14. Ventil nach einem der vorhergehenden Ansprüche, wobei das Sektorzahnrad (14) wenigstens eine radiale Vertiefung (34) aufweist, wobei die Anlagefläche (40) vorzugsweise an einem Rand (38) der radialen Vertiefung (34) ausgebildet ist.

## Claims

1. Valve, in particular a valve for a motor vehicle such as an exhaust-gas recirculation valve, comprising a toothed-sector wheel (14) rotating counter to the action of a return spring (16) acting in torsion, the rotation of the toothed-sector wheel (14) controlling the opening and the closure of the valve, the toothed-sector wheel (14) having, on one of its faces, at least one relief (50, 52) for guiding the return spring (16), preferably arranged radially inside the return spring (16), the valve being **characterized in that** an apex edge (56; 58) of the guide relief or relieves (50; 52) is helical.

2. Valve according to Claim 1, in which the guide relief or relieves comprises or comprise at least one rib (50; 52), preferably at least two ribs (50, 52), which are continuous or discontinuous, preferably still in the form of a circular arc.

3. Valve according to either of Claims 1 and 2, in which the guide relief or relieves (50; 52) has or have an adapted height for guiding at least one turn of the return spring (16), preferably two turns of the return spring (16).

4. Valve according to any one of the preceding claims, in which a guide relief (50) extends over a same angular sector as a toothed sector (54) of the toothed-sector wheel (14).

5. Valve according to any one of the preceding claims, in which the toothed-sector wheel (14) comprises, at least at a toothed sector (54), a protection ramp (60; 62) intended to cooperate with the return spring (16), the protection ramp (60; 62) having a helical surface (64; 66) oriented towards the return spring (16).

6. Valve according to any one of the preceding claims, in which the teeth of the toothed-sector wheel (14) have a constant height.

7. Valve according to any one of the preceding claims, comprising a cam (20) with a camway (22), said cam being mounted pivotably with respect to the toothed-sector wheel (14), the cam (20) being arranged radially inside the guide relief or relieves (50; 52) of the toothed-sector wheel (14).

8. Valve according to any one of the preceding claims, in which the return spring (16) comprises a first connection element, for example a hook (48) open in the circumferential direction with respect to the toothed-sector wheel (14), adapted to cooperate with a second connection element of the toothed-sector wheel (14), for example a bearing surface (40) of the toothed-sector wheel (14), the first (48) and second (40) connection elements being configured to be able to connect together the return spring (16) and the toothed-sector wheel (14), by rotation of the toothed-sector wheel (14) with respect to the return spring (16) from a position in which the return spring (48) and the toothed-sector wheel (14) are functionally independent.

9. Valve according to Claim 8, in which the toothed-sector wheel (14) comprises, at the radially outer end of the bearing surface (40), a projection (42) extending in the direction of the axis of rotation (A) of the toothed-sector wheel (14) and/or in an orthoradial direction with respect to the toothed-sector wheel (14).

10. Valve according to any one of the preceding claims, in which the toothed-sector wheel (14) is adapted to be rotated between a position corresponding to the closure of the valve and at least position corresponding to an opening of the valve.

11. Valve according to any one of the preceding claims, comprising a coupling (24) coupled in rotation with the toothed-sector wheel (14) and guided by a camway (22) in a cam (20), and a valve stem (26) coupled in translation with the coupling (24).

12. Valve according to any one of Claims 1 to 10, in which the toothed-sector wheel (14) is coupled in rotation with a flap for shutting off a passage in the valve.

13. Valve according to any one of the preceding claims, additionally comprising an actuator motor for rotating the toothed-sector wheel (14), possibly via a transmission wheel.

14. Valve according to any one of the preceding claims, in which the toothed-sector wheel (14) has at least one radial recess (34), the bearing surface (40) being preferably formed at an edge (38) of the radial recess (34).
